# EUROPÄISCHE PATENTANMELDUNG

(11) **EP 4 811 002 A1**
(43) Veröffentlichungstag der Anmeldung: **23.09.2026**
(21) Anmeldenummer: 26164165.8
(22) Anmeldetag: 12.03.2026
(51) Int. Cl.: G01T 1/169, G01T 7/00

(54) **VERFAHREN UND SYSTEM ZUR RADIOLOGISCHEN CHARAKTERISIERUNG VON OBERFLÄCHEN IN KERNTECHNISCHEN ANLAGEN**

(30) Priorität: 18.03.2025 DE 102025110392
(71) Anmelder: RWE Nuclear GmbH, 45141 Essen (DE)
(72) Erfinder: Tsiobanopoulos, Christos Panagiotis, 45141 Essen (DE); Münzer, Jörn Eike, 45141 Essen (DE)
(74) Vertreter: Keenway Patentanwälte Neumann Heine Taruttis

(57) **Zusammenfassung**

Die Erfindung betrifft ein Verfahren zur radiologischen Charakterisierung von Oberflächen (4) in kerntechnischen Anlagen, bei dem ein Raster mit einer Vielzahl von Rasterfeldern auf einer Oberfläche (4) in der kerntechnischen Anlage bereitgestellt wird; und eine radiologische Vermessung der Oberfläche (4) innerhalb eines Rasterfeldes mittels eines Strahlungsmessgeräts (9) vorgenommen wird, um die Strahlungsbelastung der Oberfläche (4) in dem Rasterfeld zu bestimmen. Das Verfahren sieht vor, dass das Raster auf der Oberfläche mittels eines Augmented-Reality-Systems (AR-System) (1) virtuell bereitgestellt wird, indem das AR-System (1) ein virtuelles Raster (7) mit einer Vielzahl von virtuellen Rasterfeldern (8) in das Sichtfeld eines Benutzers des AR-Systems (1) derart projiziert, dass das virtuelle Raster (7) im Sichtfeld des Benutzers gemäß einer vordefinierten Anordnung auf der Oberfläche (4) erscheint.

## Beschreibung

### TECHNISCHES GEBIET

Die Erfindung betrifft ein Verfahren zur radiologischen Charakterisierung von Oberflächen in kerntechnischen Anlagen, bei dem ein Raster mit einer Vielzahl von Rasterfeldern auf einer Oberfläche bereitgestellt wird; und eine radiologische Vermessung eines Rasterfeldes der Oberfläche mittels eines Strahlungsmessgeräts vorgenommen wird, um die Strahlungsbelastung in dem Rasterfeld zu bestimmen. Die Erfindung betrifft ferner ein System zur radiologischen Charakterisierung von Oberflächen in kerntechnischen Anlagen.

### HINTERGRUND DER ERFINDUNG

Die radiologische Charakterisierung ist ein wichtiger Bestandteil beim Rückbau kerntechnischer Anlagen, wie Kernkraftwerken. Die radiologische Charakterisierung dient dazu, eine präzise Dokumentation der Strahlungsbelastung auf Oberflächen wie Wänden, Böden, Decken und technischen Anlagen zu erstellen. Sie ermöglicht die genaue Identifikation kontaminierter Anlagenbereiche, das Erkennen von Grenzwertüberschreitungen und die gezielte Durchführung von Dekontaminationsmaßnahmen. Zudem hilft sie bei der Unterscheidung zwischen freigabefähigen und weiterhin zu behandelnden Anlagenbereichen und ist damit für behördliche Freigaben im Rückbauprozess unerlässlich.

Ein zentrales Element der radiologischen Charakterisierung ist die Rastervermessung. Dabei wird eine zu vermessende und eventuell kontaminierte Oberfläche in ein systematisches Raster aufgeteilt, dessen Abmessungen von der spezifischen Kontaminationssituation sowie den geltenden technischen Anforderungen abhängen. Ein typisches Raster für Flächen wie Wände oder Böden umfasst Rasterfelder mit einer 1m mal 1m Rasterfeldgröße. Die Rastereinteilung soll eine systematische und lückenlose Charakterisierung der Oberfläche sowie eine vollständige Dokumentation der Strahlungsbelastung gewährleisten. Durch die strukturierte Einteilung der Oberfläche in Rasterfelder können die Messungen besser Positionen zugeordnet und entsprechend dokumentiert werden, was eine verlässliche Grundlage für nachfolgende Messungen und Auswertungen schafft. Außerdem ist eine vollständige Dokumentation grundlegende Voraussetzung für behördliche Freigaben.

Üblicherweise beginnt die Rastervermessung mit der Erstellung eines Grundplans der betroffenen Oberfläche. Dazu werden der betreffende Anlagenbereich und insbesondere dort betroffene Flächen geometrisch vermessen. Dies kann anhand von vorhandenen Plänen erfolgen oder die Abmessungen werden mittels Scans oder Laservermessungen digital erfasst. Anschließend werden ein digitales Modell des betreffenden Anlagenbereichs erstellt und Rasterpläne für die Oberflächen erstellt, d.h. die Oberflächen werden zum Zwecke der späteren radiologischen Charakterisierung in Raster eingeteilt. Mit Hilfe des in der Planungsphase ausgearbeiteten Rasterplans für jede zu vermessende Oberfläche kann die Vermessung vor Ort im kontaminierten Anlagenbereich vorbereitet werden. Dazu wird das für die jeweilige Oberfläche zuvor erarbeitete Raster präzise auf die Oberfläche aufgetragen, üblicherweise durch das Auftragen farbiger Linien auf die Oberfläche. Bei der eigentlichen radiologischen Untersuchung werden dann die Felder des Rasters mit einem Strahlungsmessgerät, üblicherweise einem Flächenmessgerät, systematisch abgefahren und vermessen. Bereiche innerhalb des vermessenen Rasterfeldes mit erhöhter Strahlungsbelastung, so genannten Hotspots, werden durch Vergleich der gemessenen Werte mit vorgegebenen Grenzwerten identifiziert und auf die betreffende Stelle im Rasterfeld wird eine geeignete Markierung aufgebracht. Oftmals wird auch nur der Hotspot mit der höchsten Strahlungsbelastung gesucht und entsprechend markiert. Der identifizierte Hotspot wird einer weiteren, sogenannten Langzeitmessung unterzogen, um die Strahlungsbelastung über einen längeren Zeitraum hinweg zu bestimmen. Diese Langzeitmessungen liefern genaue Informationen über die Strahlungsintensität des Hotspots und helfen dabei, die notwendige Dekontaminationsmaßnahme festzulegen. Die Position des Hotspots innerhalb des betreffenden Rasterfeldes wird ausgemessen und zusammen mit der zugehörigen Strahlungsbelastung dokumentiert. Je nach Höhe der gemessenen Strahlung wird dann gezielt ein Teil, z.B. eine Schicht, der kontaminierten Oberfläche abgetragen. In einem weiteren Schritt wird eine erneute Messung durchgeführt, um den Erfolg der Maßnahme zu bestätigen. Bei Bedarf werden weitere Abschnitte der Oberfläche abgetragen.

Das Auftragen des auf die jeweilige Oberfläche zugeschnittenen Rasters erfordert höchste Genauigkeit und ist dementsprechend zeit- und arbeitsintensiv. Die Position und Größe des Rasters auf der Oberfläche ist vorab genau im Rasterplan festgelegt. Weicht die Position des aufgetragenen Rasters auf der Oberfläche jedoch von der im Plan bestimmten Position ab, stimmen die vor Ort gemessenen Koordinaten eines Messpunkts im Raster nicht mit den Koordinaten aus dem Rasterplan überein. Dies führt zu einer fehlerhaften Zuordnung, da die gemessenen Koordinaten nicht denselben Punkt definieren wie im Rasterplan. Solche Abweichungen erschweren die korrekte Dokumentation und können zu fehlerhaften Zuordnungen der Messergebnisse führen, was sich insbesondere in Bezug auf die behördliche Nachweispflicht als problematisch erweist.

Zudem kann die radiologische Vermessung erschwert werden, wenn Strukturen der kerntechnischen Anlage im Zuge von Dekontaminationsmaßnahmen verändert werden, beispielsweise, wenn Oberflächenabschnitte entfernt werden, in denen zuvor ein Hotspot identifiziert wurde. Durch das Abtragen von Abschnitten der Oberfläche können Rasterlinien in Mitleidenschaft gezogen oder gänzlich entfernt werden und müssen anschließend mühsam neu aufgetragen werden. Zudem können strukturelle Veränderungen der Messoberfläche dazu führen, dass wichtige Referenzpunkte wie Wandenden oder markierte Fixpunkte verloren gehen. Dies kann dazu führen, dass das Raster beim erneuten Auftragen gegenüber der ursprünglich geplanten Position verschoben wird. Das zieht Fehler bei der Zuordnung der Messpunkte und der Dokumentation nach sich.

Es ist die Aufgabe der Erfindung, eine effizientere Lösung für die radiologische Charakterisierung kontaminierter Bereiche in kerntechnischen Anlagen vorzuschlagen, insbesondere für den Rückbau kerntechnischer Anlagen.

### ZUSAMMENFASSUNG DER ERFINDUNG

Die der Erfindung zugrundeliegende Aufgabe wird gelöst mit dem Verfahren und dem System gemäß den unabhängigen Ansprüchen. Weitere vorteilhafte Ausgestaltungen sind in den abhängigen Ansprüchen und der Beschreibung angegeben. Die in den Ansprüchen und in der Beschreibung dargestellten Merkmale sind in beliebiger, technologisch sinnvoller Weise miteinander kombinierbar.

Die Erfindung wird hinsichtlich mehrerer Aspekte beschrieben, die ein Verfahren und ein System betreffen. Die Ausführungen zu den einzelnen Aspekten ergänzen einander, sodass die Ausführungen zum System auch als Ausführungen zum Verfahren zu verstehen sind und andersherum. Sämtliche Ausführungen betreffend das erfindungsgemäße Verfahren gelten folglich gleichermaßen in Bezug auf das System, das demgemäß ausgebildet ist und über die in Bezug auf das Verfahren erläuterten strukturellen und funktionalen technischen Einrichtungen zur Ausführung des Verfahrens verfügen kann.

In einem ersten Aspekt der Erfindung wird ein Verfahren zur radiologischen Charakterisierung von Oberflächen in kerntechnischen Anlagen vorgestellt, bei dem ein Raster mit einer Vielzahl von Rasterfeldern auf einer Oberfläche in der kerntechnischen Anlage bereitgestellt wird; und eine radiologische Vermessung der Oberfläche innerhalb eines Rasterfeldes mittels eines Strahlungsmessgeräts vorgenommen wird, um die Strahlungsbelastung der Oberfläche in dem Rasterfeld zu bestimmen. Erfindungsgemäß wird das Raster auf der Oberfläche mittels eines Augmented-Reality-Systems (AR-System) einem Benutzer virtuell bereitgestellt, indem das AR-Gerät ein virtuelles Raster mit einer Vielzahl von virtuellen Rasterfeldern in das Sichtfeld eines Benutzers derart projiziert, dass das virtuelle Raster im Sichtfeld des Benutzers gemäß einer vordefinierten Anordnung auf der Oberfläche erscheint.

Im Gegensatz zum sonst üblichen Vorgehen ist es nicht erforderlich, das Raster physisch auf die betreffende Oberfläche in der kerntechnischen Anlage aufzutragen. Das AR-System stellt dem Benutzer des AR-Systems das Sichtfeld bereit. Das Raster wird in das durch das AR-System bereitgestellte Sichtfeld und damit in das Sichtfeld des Benutzers projiziert. Die Einblendung des virtuellen Rasters erfolgt basierend auf zuvor bereitgestellten Rasterdaten, die die Anordnung des Rasters auf der Oberfläche vorgeben. Wenn der Benutzer mit dem AR-System auf die physische Oberfläche blickt, wird das reale Bild der Oberfläche mit dem virtuellen Raster überlagert. Mittels des in das Sichtfeld projizierten Rasters kann der Benutzer die Vermessung der Oberfläche innerhalb eines ihm visuell im Sichtfeld dargebotenen Rasterfeldes vornehmen, ohne auf physische Rasterlinien auf der Oberfläche angewiesen zu sein. Das erlaubt eine gezielte rasterbasierte Vermessung von Oberflächen in kerntechnischen Anlagen bei verringertem Zeit- und Arbeitsaufwand. Davon profitiert der gesamte Rückbauprozess einer kerntechnischen Anlage.

Das Verfahren dient dazu, eine radiologische Vermessung der Oberfläche innerhalb eines Rasterfeldes mittels eines Strahlungsmessgeräts vorzunehmen, um die Strahlungsbelastung der Oberfläche in dem Rasterfeld zu bestimmen. In besonders bevorzugter Weise können Bereiche innerhalb des vermessenen Rasterfeldes mit erhöhter Strahlungsbelastung (Hotspots) durch Vergleich der gemessenen Werte mit vorgegebenen Grenzwerten identifiziert werden.

Die Bereitstellung des virtuellen Rasters mit der Vielzahl von virtuellen Rasterfeldern auf der Oberfläche des kontaminierten Anlagenbereichs basiert auf einem vordefinierten Rasterplan. Dieser wird, wie sonst üblich, in der Planungsphase der radiologischen Vermessung erstellt. Im Gegensatz zum manuellen Auftragen des Rasters auf die physische Oberfläche erfolgt die Bereitstellung des Rasterplans digital und in virtueller Form. Das virtuelle Raster wird auf Grundlage der bereitgestellten Rasterdaten projiziert, sodass die Abmessungen und Anordnung des dargestellten Rasters exakt mit denen des Rasterplans übereinstimmen. Dadurch werden menschliche Fehlerquellen, wie ein fehlerhaftes Einzeichnen des Rasters auf der Oberfläche, ausgeschlossen. Außerdem reduziert die Bereitstellung eines virtuellen Rasters auf der Oberfläche in einem erheblichen Maße den Aufwand der radiologischen Vermessungsvorbereitungen und die damit verbundenen Kosten.

Die Bereitstellung des Rasters im AR-System basiert auf etablierten Technologien, die bereits in verschiedenen Anwendungsbereichen erfolgreich eingesetzt werden. Augmented Reality (AR) ist eine Technologie, die es ermöglicht, eine direkte oder indirekte Live-Ansicht der physischen Welt zu erzeugen, indem sie diese mit computergenerierten sensorischen Beiträgen wie Ton, Video oder Abbildungen erweitert. AR ist ein Konzept, bei dem eine Ansicht der Realität durch eine Datenverarbeitungseinheit, wie einen Computer, modifiziert wird. Die Wahrnehmung der realen Welt wird erweitert, indem zusätzliche digitale Informationen in Form virtueller Elemente in das Sichtfeld des Nutzers integriert werden. Diese virtuellen Elemente werden direkt in das Sichtfeld des Nutzers projiziert und erscheinen so, dass sie in der Darstellung der realen Welt räumlich und tiefenbezogen angezeigt werden, was zu einer realistischen Wahrnehmung der erweiterten Realität führt. Dies kann entweder als Überlagerung auf die reale Welt oder durch eine digitale Anzeige, die sowohl die reale Welt als auch die virtuellen Elemente kombiniert erfolgen. Die Projektion erfolgt in der Regel durch Displays, die z.B. in Brillen integriert sind. Der Benutzer blickt durch die Brillengläser, die als Träger für die projizierten virtuellen Elemente dienen, die an den entsprechenden Stellen im Sichtfeld des Nutzers eingeblendet werden.

Ein AR-System besteht aus mehreren Komponenten: der Hardware, wie einer AR-Brille, Sensoren, die für die Erfassung von Umgebungsdaten zuständig sind, und Software, die die Verarbeitung dieser Daten und das Rendering der virtuellen Inhalte übernimmt. Die Sensoren - wie z.B. Kameras, GPS-Systeme und mehrachsige Beschleunigungsmesser - sammeln kontinuierlich Informationen über die Umgebung, Position und Ausrichtung des Geräts. Die erfassten Echtzeitdaten werden von der Datenverarbeitungseinheit verarbeitet, die dafür sorgt, dass die Rasterlinien korrekt in der Ansicht der realen Welt platziert werden. Die Datenverarbeitungseinheit berechnet in Echtzeit, wie die virtuellen Inhalte in Bezug auf den Blickwinkel und die Position des AR-System korrekt angezeigt werden müssen.

In der Augmented Reality kann die Realität oder Umgebung entweder als Videobild oder durch einen transparenten Bildschirm betrachtet werden, in die jeweils die Einblendung des AR-Objekts erfolgt. Im ersten Falle spricht man von "Video See-Through" (VST), im zweiten Falle von "Optical See-Through" (OST). Umgesetzt werden diese Konzepte unter anderem in AR-Brillen. Bei den "Optical See-Through"-Brillen handelt es sich um Geräte, bei denen der Nutzer durch die Brille hindurch auf die reale Welt blickt, während virtuelle Elemente über diese Sichtlage gelegt werden. Bei den "Video See-Through"-Brillen handelt es sich um Brillen, bei denen der Nutzer die Welt durch einen Bildschirm sieht, der sowohl die reale Welt als auch digitale Elemente anzeigt.

Manche AR-Systeme erfordern häufig zur vollen Funktionsfähigkeit einen Anschluss an einen externen Rechner, der die erforderliche Rechenleistung und Datenverarbeitung bereitstellt. Im Sinne der Erfindung werden daher unter einem AR-System auch Systeme verstanden, bei denen ein AR-Gerät, wie eine AR-Brille, an einen Computer, wie einen Laptop, angeschlossen ist.

Das erfindungsgemäße Verfahren eignet sich insbesondere für den Rückbau kerntechnischer Anlagen.

Nach einer weiteren Ausführungsform der Erfindung ist vorgesehen, dass, wenn bei der radiologischen Vermessung der Oberfläche eine Strahlungsbelastung gemessen wird, die einen vordefinierten Grenzwert überschreitet, zumindest der Abschnitt der Oberfläche mit der erhöhten Strahlungsbelastung abgetragen, also entfernt wird. Dies kann durch Abtragen einer Schicht der Oberfläche erfolgen. Wenn die radiologische Vermessung eines Rasterfeldes einen Hotspot identifiziert, stellt das gezielte Abtragen des betreffenden Abschnitts der Oberfläche einen wichtigen Schritt dar, um die Strahlungsbelastung der Anlage zu reduzieren. Durch eine detaillierte Analyse des abgetragenen Materials kann überprüft werden, ob die Strahlenquelle tatsächlich innerhalb der abgetragenen Schicht der Oberfläche lag. Falls nach dem Abtrag weiterhin eine erhöhte Strahlungsbelastung besteht, kann festgestellt werden, ob die Entfernung eines weiteren Abschnitts der Oberfläche erforderlich ist. Hierbei erweist sich die virtuelle Darstellung des Rasters als besonders vorteilhaft. Die Rasterlinien stehen auch dann zur Verfügung, wenn bereits Abschnitte der Oberfläche entfernt worden sind. Das Raster muss nicht, wie sonst erforderlich, neu auf die Oberfläche geschrieben werden.

Nach einer weiteren Ausführungsform der Erfindung ist vorgesehen, dass eine Position des Strahlungsmessgeräts im virtuellen Rasterfeld durch das AR-System bestimmt wird, und die ermittelte Position durch das AR-System an einen Datenspeicher, insbesondere eine Datenbank übermittelt und dort gespeichert wird. Bei der radiologischen Vermessung der Oberfläche wird die Position (Koordinaten) des Messgeräts im virtuellen Rasterfeld durch das AR-System kontinuierlich oder punktuell (z.B. nach Eingabeaufforderung durch den Benutzer) ermittelt. Dies kann beispielsweise durch ein Kamerasystem des AR-Systems sowie Bildverarbeitungsalgorithmen erfolgen. Die Koordinaten des Strahlungsmessgeräts im virtuellen Rasterfeld werden durch das AR-System an den Datenspeicher übermittelt und dort in digitaler Form gespeichert. Die Übermittlung der Daten an den Datenspeicher erfolgt über eine Datenverbindung. Der Datenspeicher kann direkt im AR-System integriert sein, wodurch die Daten zunächst lokal gespeichert werden, oder die Daten werden über eine Signalverbindung an einen externen Speicher, vorzugsweise eine externe Datenbank, übertragen. Die Signalverbindung ist bevorzugt eine drahtlose Signalverbindung, beispielsweise in Form von Bluetooth, WLAN oder einem anderen Funkstandard. Im Fall der lokalen Speicherung können die Daten später in eine Hauptdatenbank, die mehreren kontaminierten Anlagenbereichen zugeordnet sein kann, überspielt werden. Durch die Positionsermittlung und Speicherung der Positionsdaten mittels des AR-Systems entfällt die Notwendigkeit, die Positionen manuell in eine Datenbank einzutragen.

Nach einer weiteren Ausführungsform der Erfindung ist vorgesehen, dass die ermittelte Position des Strahlungsmessgeräts im virtuellen Rasterfeld zusammen mit der zugehörigen gemessenen Strahlungsbelastung, z.B. dem Strahlungsmesswert, an den Datenspeicher, insbesondere eine Datenbank, gesendet und in diesem gespeichert werden. Hierzu kann das Strahlungsmessgerät signaltechnisch über eine Signalverbindung mit dem AR-System verbunden sein, sodass das AR-System die Daten zu den gemessenen Strahlungsbelastungen und den Positionen an den Datenspeicher übergibt; oder das Strahlungsmessgerät ist signaltechnisch mit dem Datenspeicher verbunden und übergibt die Daten zur Speicherung direkt. Es können die Messwerte und Positionen zu einem Messpunkt, wie einem Hotspot, oder zu mehreren Messpunkten bestimmt und gespeichert werden. Auch eine kontinuierliche Erfassung der Positionen des Strahlungsmessgeräts im virtuellen Rasterfeld sowie der zugehörigen gemessenen Strahlungsbelastungen ist möglich. Dadurch ist ein aussagekräftiges Bild über die Strahlungsbelastung der gesamten Oberfläche abrufbar. Beispielsweise kann das Rasterfeld vollständig mit dem Strahlungsmessgerät abgefahren und vermessen werden, wobei sowohl die Positionen der Messpunkte als auch die zugehörigen gemessenen Strahlungsbelastungen kontinuierlich erfasst und gespeichert werden. Diese umfassende Erfassung ermöglicht eine effiziente Auswertung des gesamten Rasterfelds. Beispielsweise kann die Strahlungsbelastung des gesamten Feldes analysiert und visuell aufbereitet werden, etwa durch die Darstellung in Falschfarben. Die digitale Speicherung der Daten erleichtert zudem die Dokumentation des Rückbauprozesses. Die Daten können durch die Signalverbindung unmittelbar gespeichert werden, wodurch das manuelle Eintragen in die Datenbank von Messwerten und den zugehörigen Positionen entfällt. Dies vereinfacht den gesamten Prozess und reduziert Fehlerquellen, die durch manuelle Eingaben entstehen könnten.

Nach einer weiteren Ausführungsform der Erfindung ist vorgesehen, dass dann, wenn eine Strahlungsbelastung gemessen wird, die einen vordefinieren Grenzwert überschreitet (Hotspot), die gemessene Strahlungsbelastung sowie die zugehörige ermittelte Position des Strahlungsmessgeräts im virtuellen Rasterfeld an den Datenspeicher gesendet und dort gespeichert werden, wobei das Strahlungsmessgerät signaltechnisch mit dem Datenspeicher und/oder dem AR-System verbunden ist. Hier werden lediglich die Punkte aufgezeichnet, die in dem Rasterfeld über eine erhöhte Strahlungsbelastung verfügen. So können Hotspots in effizienter Weise identifiziert und markiert werden.

Nach einer weiteren Ausführungsform der Erfindung ist vorgesehen, dass die gemessene Strahlungsbelastung sowie die zugehörige ermittelte Position des Strahlungsmessgeräts im Rasterfeld an den Datenspeicher gesendet wird, wenn eine Langzeitmessung eines Hotspots durchgeführt wird. Eine Langzeitmessung wird durchgeführt, wenn ein Hotspot auf der Oberfläche identifiziert worden ist. Hotspots werden durch Vergleich der gemessenen Strahlungsbelastung mit vorgegebenen Grenzwerten identifiziert. Dies geschieht in der Regel bei einem vorherigen Flächenscan der Oberfläche im Rasterfeld. Die automatische Erfassung der Position und die damit korrespondierende Strahlungsbelastung bei der Langzeitmessung erleichtert nicht nur die Dokumentation, sondern erhöht auch die Sicherheit. Durch die kontinuierliche Erfassung der Position des Strahlungsmessgeräts wird gewährleistet, dass das Gerät während der gesamten Langzeitmessung an der richtigen Stelle bleibt und somit die Messungen genau und zuverlässig sind.

Nach einer weiteren Ausführungsform der Erfindung ist vorgesehen, dass der Bereich der Oberfläche mit der höchsten Strahlungsbelastung identifiziert wird und in einem weiteren Schritt der Bereich vermessen wird und die gemessene Strahlungsbelastung sowie die zugehörige ermittelte Position des Strahlungsmessgeräts im virtuellen Rasterfeld an den Datenspeicher gesendet und dort gespeichert werden.

Die ermittelte Position des Strahlungsmessgeräts kann in das Sichtfeld des Benutzers projiziert werden, z.B. in Form von Koordinatenangaben oder farbigen Markierungen. Alternativ oder zusätzlich können auch Informationen zur Strahlungsbelastung an der jeweiligen Position, z.B. der ermittelte Messwert, in das Sichtfeld projiziert werden. Das AR-System kann dazu eingerichtet sein, in dem virtuellen Rasterfeld den Bereich der Oberfläche mit der höchsten gemessenen Strahlungsbelastung zu markieren.

Nach einer weiteren Ausführungsform der Erfindung ist vorgesehen, dass auf Grundlage der in dem Datenspeicher gespeicherten Positionen und der zugehörigen gemessenen Strahlungsbelastungen eine Dokumentation zur Strahlungsbelastung der Oberfläche erstellt wird. Auf Basis der gespeicherten Daten kann eine strukturierte Dokumentation erstellt werden, insbesondere automatisiert, die für die behördliche Freigabe der Oberfläche, oder auch ganzen Bereichen der kerntechnischen Anlage notwendig ist. Die Dokumentation umfasst neben den erfassten Strahlungswerten auch die genaue Position der Messpunkte innerhalb des Rasters. Auch können Angaben wie Messmethoden, geltende Grenzwerte und andere Angaben automatisiert in die Dokumentation mit einfließen. Diese Informationen sind essenziell, um nachzuweisen, dass die kontaminierte Fläche erfolgreich dekontaminiert ist und die Freigabekriterien eingehalten werden.

Nach einer weiteren Ausführungsform der Erfindung ist vorgesehen, dass die Position eines oder mehrerer identifizierten Hotspots im projizierten virtuellen Raster manuell oder automatisch markiert wird. Dazu ist vorgesehen, dass ein oder mehrere Abschnitte auf der Oberfläche, in denen die gemessene Strahlungsbelastung einen vordefinieren Grenzwert überschreitet, im projizierten Raster manuell oder automatisch visuell hervorgehoben werden. Durch die visuelle Hervorhebung des Hotspots kann dieser leicht identifiziert und von anderen Bereichen unterschieden werden. Dies erleichtert insbesondere die Langzeitmessung eines Hotspots. Besonders vorteilhaft ist, wenn die Markierungen ebenfalls in dem Datenspeicher gespeichert werden, sodass diese später abgerufen und genutzt werden können, beispielsweise in virtuellen Planungsräumen.

Nach einer weiteren Ausführungsform der Erfindung ist vorgesehen, dass eine digitale Momentaufnahme des Sichtfelds des Benutzers gemacht wird, wobei diese Momentaufnahme an den Datenspeicher zur Speicherung übermittelt wird. Die Momentaufnahme kann dabei als statisches Bild oder als Videoaufnahme vorliegen. Die Aufnahme kann automatisiert ausgelöst werden, beispielsweise durch ein Auslöser-Ereignis wie die Langzeitmessung eines Hotspots. Die Momentaufnahme kann auch durch einen Benutzerbefehl initiiert werden. Benutzerbefehle an das AR-System können beispielweise über Sprachsteuerung oder Gestensteuerung an das AR-System gegeben werden. Die Verwendung von Momentaufnahmen des Sichtfelds des Benutzers bietet Vorteile für die Dokumentation und Nachvollziehbarkeit der Messungen. Durch die visuelle Aufzeichnung der Messstellen und der zugehörigen Messwerte wird eine vollständige und vor allem transparente Dokumentation ermöglicht.

Ein externer Datenzugang zu den in dem Datenspeicher abgelegten Daten, z.B. der ermittelten Position des Strahlungsmessgeräts im virtuellen Rasterfeld zusammen mit der zugehörigen gemessenen Strahlungsbelastung, kann bereitgestellt werden, um beispielsweise Freigabebehörden über das Internet einen Zugriff auf die Daten zu ermöglichen.

Nach einer weiteren Ausführungsform der Erfindung ist vorgesehen, dass ein maschinenlesbares Signal bereitgestellt wird, das einer vordefinierten Oberfläche in der kerntechnischen Anlage zugewiesen ist, wobei das AR-System dazu eingerichtet ist, das maschinenlesbare Signal zu erfassen, wobei in Reaktion auf das Erfassen des maschinenlesbaren Signals durch das AR-System, der Oberfläche zugeordnete Rasterdaten bereitgestellt werden, wobei die Rasterdaten die Anordnung des virtuellen Rasters auf der Oberfläche vorgeben. Genutzt wird ein maschinenlesbares Signal (z. B. ein QR-Code), das der Oberfläche, auf die das Raster virtuell projiziert werden soll, zugeordnet ist. Bevorzugt ist ein OR-Code auf der Oberfläche angebracht, der es dem AR-System ermöglich, die Rasterdaten für die entsprechende Oberfläche abzurufen. Das AR-System ist dazu mit einer Kamera oder einem anderen Sensor ausgestattet, der den OR-Code erfasst. Alternative Möglichkeiten zur Bereitstellung des maschinenlesbaren Signals umfassen weitere optische Marker wie Barcodes, die durch das Kamerasystem des AR-Systems erkannt werden, sowie RFID- oder NFC-Technologie zur drahtlosen Datenübertragung. Zudem können Ultraschallsignale oder andere drahtlose Kommunikationsverfahren genutzt werden, um die benötigten Informationen an das AR-System zu übermitteln. Der Code kann als Auslöser für das Laden der Rasterdaten zu der betreffenden Oberfläche dienen. Alternativ kann dem Benutzer nach Einlesen oder Empfangen des maschinenlesbaren Signals eine Eingabemöglichkeit bereitgestellt werden, wobei nach Betätigen der Eingabe durch den Benutzer die Rasterdaten zu der Oberfläche bereitgestellt und eingelesen werden. Das Einlesen der Rasterdaten in das AR-System kann durch eine Datenverbindung zu einem Speicherort erfolgen, von dem die Rasterdaten abgerufen werden. Der Speicherort kann lokal auf dem AR-System oder in einem externen Speicher, wie einem Netzwerk-Speicher, abgelegt sein. Wenn die Rasterdaten lokal auf dem AR-System gespeichert sind, erfolgt der Zugriff direkt über den internen Speicher des Systems. Sind die Rasterdaten extern gespeichert, etwa auf einem Server oder in einer Cloud-Datenbank, wird eine Netzwerkverbindung (drahtlos oder kabelgebunden) genutzt, um die benötigten Daten abzurufen. Das maschinenlesbare Signal kann auch als Referenzpunkt zur Darstellung des virtuellen Rasters dienen.

Nach einer weiteren Ausführungsform der Erfindung ist vorgesehen, dass eine Kommunikationsverbindung zwischen dem AR-System und einem externen Kommunikationsgerät über ein Netzwerk hergestellt wird, wobei die Kommunikationsverbindung einen Video-Feed und/oder eine Sprachverbindung umfasst. Der Videofeed umfasst ein Echtzeitbild des Sichtfeldes des Benutzers. Die Bereitstellung einer Kommunikationsverbindung versetzt einen Kommunikationspartner in die Lage, in Echtzeit zu sehen, was der Benutzer des AR-Systems sieht, einschließlich der virtuellen und realen Elemente, die im Sichtfeld des Benutzers vorhanden sind. Die Sprachverbindung ermöglicht eine bidirektionale Audioübertragung zwischen dem Benutzer und dem Kommunikationspartner. Dies gibt dem Benutzer des AR-Systems die Möglichkeit, einen Fachmann zu konsultieren, beispielweise wenn Strahlungsmessungen an Oberflächen vorgenommen werden sollen, die strukturelle Besonderheiten, wie Bohrlöcher, aufweisen. Der Fachmann kann das augmentierte oder das nicht-augmentierte Sichtfeld des Benutzers sehen und gezielte Anweisungen oder Empfehlungen geben, die der Benutzer direkt vor Ort an Oberfläche umsetzen kann. Der Benutzer des AR-Systems hat die Möglichkeit, durch das Setzen virtueller Markierungen mittels z.B. Gesten- oder Sprachsteuerung bestimmte Bereiche hervorzuheben oder auf relevante Abschnitte hinzuweisen. Dies erleichtert die Kommunikation zwischen dem Fachmann und dem Benutzer erheblich, da Missverständnisse reduziert und Arbeitsprozesse gezielt gesteuert werden können.

Nach einer weiteren Ausführungsform der Erfindung ist vorgesehen, dass über die Kommunikationsverbindung an das AR-System übermittelte Steuerbefehle eine Modifikation des Sichtfeldes des Benutzers bewirken. Hierzu kann das AR-System zusätzlich dazu eingerichtet sein, dem Kommunikationspartner die Möglichkeit zu geben, virtuelle Inhalte im Sichtfeld des Benutzers zu steuern, insbesondere virtuelle Markierungen oder Hinweise in das augmentierte Bild einzublenden. Dadurch wird der Kommunikationspartner in die Lage versetzt, gezielt in die Wahrnehmung des Benutzers einzugreifen, indem er visuelle Hilfestellungen oder spezifische Markierungen in Echtzeit hinzufügt. Das bietet dem Benutzer nicht nur eine verbesserte Orientierung, sondern auch eine dynamische Unterstützung.

Die Erfindung betrifft in einem weiteren Aspekt ein System zur radiologischen Charakterisierung von Oberflächen in kerntechnischen Anlagen, insbesondere zur Durchführung eines oder mehrerer der hierin beschriebenen Verfahren. Das System umfasst ein Speichermedium, das maschinenlesbare Rasterdaten aufweist, die zumindest einer Oberfläche der kerntechnischen Anlage zugeordnet sind und die ein Raster mit einer Vielzahl von Rasterfeldern auf der Oberfläche definieren, und ein AR-System, das dazu eingerichtet ist, die Rasterdaten zu verarbeiten und das Raster als ein virtuelles Raster in das Sichtfeld eines Benutzers des AR-Systems derart zu projizieren, dass aus dessen Sicht das virtuelle Raster gemäß einer durch die Rasterdaten definierten Anordnung auf der Oberfläche erscheint. Wie hierin bereits ähnlich beschrieben, sind die Rasterdaten so auf die physische Oberfläche, vor der der Benutzer des AR-Systems vor Ort steht und auf die er seinen Blick richtet, angepasst, dass das Bild der Realität, das der Benutzer von der Oberfläche sieht, mit dem virtuellen Raster überlagert wird. Das Raster erscheint aus Sicht des Benutzers des AR-Systems auf der Oberfläche.

Das System kann ferner das hierin beschriebene Strahlungsmessgerät umfassen, das mit dem System signaltechnisch koppelbar ist, um Daten zu gemessenen Strahlungsbelastungen von dem Strahlungsmessgerät zu verarbeiteten, insbesondere zu speichern oder an einen Datenspeicher weiterzuleiten. Das AR-System kann insbesondere dazu eingerichtet sein, eine oder mehrere der hierin in Bezug auf das Verfahren erläuterten Funktionen auszuführen. Hierzu zählen insbesondere das Einfügen und/oder Einblenden von Markierungen, das Anzeigen von Informationen zu Positionen des Strahlungsmessgeräts, das Anzeigen von gemessenen Strahlungsbelastungen durch das Strahlungsmessgerät und/oder das Erfassen und Verarbeiten von maschinenlesbaren Signalen.

Nach einer bevorzugten Ausführungsform der Erfindung ist vorgesehen, dass das System das Strahlungsmessgerät umfasst, das mit dem System signaltechnisch koppelbar ist, wobei das System dazu eingerichtet ist, eine Position des Strahlungsmessgeräts auf der Oberfläche zu bestimmen und zusammen mit der zugehörigen gemessenen Strahlungsbelastung zu speichern oder an einen Datenspeicher weiterzuleiten. Bevorzugt ist das System so eingerichtet, dass es einen externen Zugang zu den gespeicherten Daten bereitstellt. Wie bereits angesprochen, kann ein Datenspeicher dazu konfiguriert sein, dass eine Behörde von extern über das Internet auf die Datenbank zugreifen kann. So können behördliche Stellen unkompliziert auf die Daten zugreifen, was die behördliche Dokumentation vereinfacht und den Freigabeprozess effizienter gestaltet. Das Strahlungsmessgerät ist dazu eingerichtet, Strahlungsbelastungen zu messen und die entsprechenden Messdaten zur Strahlungsbelastung über die signaltechnische Verbindung an das System zu übermitteln. Das System ist dazu eingerichtet, gleichzeitig die Position des Strahlungsmessgeräts zu bestimmen, wobei diese Position derjenigen der aktuell gemessenen Strahlungsbelastung entspricht. So können Daten zu Strahlungsbelastungen zusammen mit den zugehörigen Positionen auf der Oberfläche abrufbar gespeichert werden. Das Strahlungsmessgerät kann drahtlos, z.B. via Bluetooth, oder drahtgebunden mit dem System verbunden werden.

Das AR-System kann insbesondere über Mittel zur drahtlosen Kommunikation verfügen, wie beispielsweise WLAN, Mobilfunk (z. B. 4G, 5G), Bluetooth oder Funkverbindungen, um Daten mit externen Systemen auszutauschen.

### FIGURENBESCHREIBUNG

Die Erfindung wird nachfolgend anhand von Figuren näher erläutert. Die Figuren zeigen bevorzugte Ausführungsbeispiele, auf die die Erfindung jedoch nicht begrenzt ist. Die Figuren und die darin dargestellten Größenverhältnisse sind nur schematisch. Es zeigen:
- FIG. 1: ein AR-System nach einer Ausführungsform der Erfindung und eine Oberfläche in einer kerntechnischen Anlage;
- FIG. 2: die Bereitstellung eines Rasters auf der Oberfläche aus Figur 1; und
- FIG. 3: die radiologische Vermessung der Oberfläche aus Figur 2.

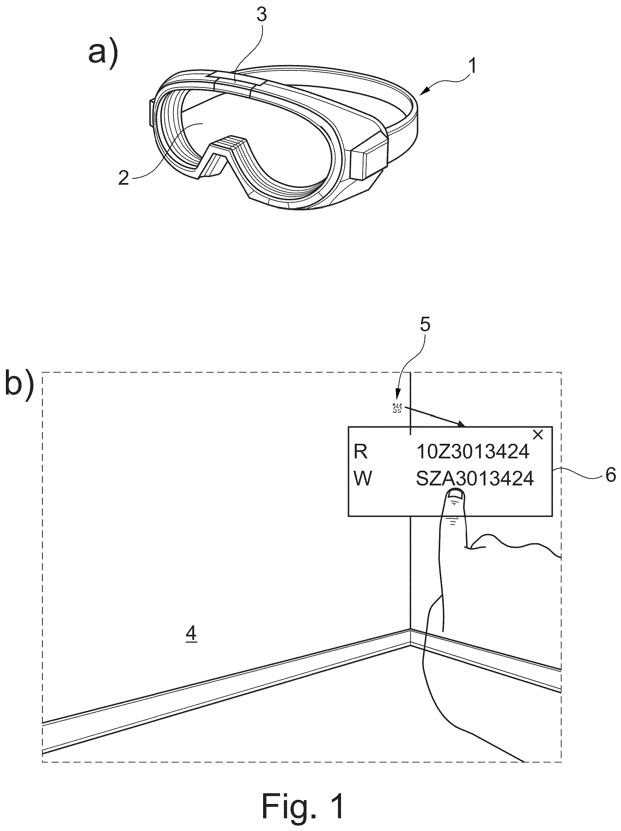

FIG. 1 zeigt in Darstellung a) eine AR-System 1 in Form einer Datenbrille, auch bezeichnet als "AR-Brille". Die AR-Brille 1 weist ein transparentes Display 2 auf, dass dem Träger (Benutzer) der AR-Brille ein Sichtfeld bereitstellt. Das AR-System 1 ist dazu eingerichtet, virtuelle Elemente auf das Display 2 zu projizieren, sodass diese im Sichtfeld des Benutzers erscheinen. Ferner verfügt die AR-Brille 1 noch über Sensoren 3, wie insbesondere Kameras und Beschleunigungsmesser, mit der die AR-Brille 1 ihre Umgebung sowie seine Position und Ausrichtung erfasst.

FIG.1 zeigt in Darstellung b) das Sichtfeld eines Benutzers des AR-Systems 1, welcher die AR-Brille vor seinen Augen trägt. Der Benutzer steht vor einer radiologisch zu vermessenden Wand in einer kerntechnischen Anlage. Sein Blick ist gerichtet auf die Oberfläche 4 der Wand. Auf der Oberfläche 4 ist ein maschinenlesbares Signal 5 in Form eines OR-Codes angebracht. Das AR-System erfasst über sein Kamerasystem den OR-Code 5 und liest diesen aus. Der OR-Code 5 ist speziell der Wand zu geordnet, auf der er angebracht ist. Dem Benutzer werden die Identifikationsmerkmale der Oberfläche 4 in Form eines Interaktionsfensters 6 eingeblendet. Durch Gestensteuerung (angedeutet durch die transparente Hand) kann der Benutzer das Interaktionsfenster 6 zur Bestätigung anklicken. Infolgedessen werden Rasterdaten geladen, die speziell der Oberfläche 4 zugeordnet sind.

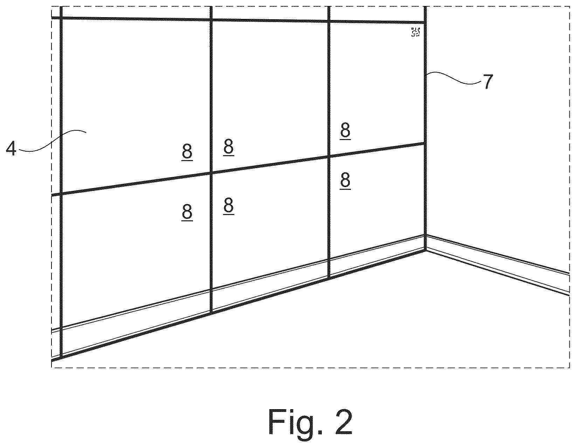

FIG. 2 zeigt die Oberfläche 4 aus Sicht des die AR-Brille tragenden Benutzers. Nachdem die Rasterdaten über den OR-Code 5 aus FIG. 1 geladen worden sind, projiziert die AR-Brille ein virtuelles Raster 7 auf das transparente Display. Dadurch erscheint im Sichtfeld des Benutzers das virtuelle Raster 7 gemäß einer in den Rasterdaten vordefinieren Anordnung auf der Oberfläche 4. Das Raster 7 besteht aus einer Vielzahl an Rasterfeldern 8, die auf der Oberfläche 4 eine Größe von 1m mal 1m aufweisen.

Die radiologische Vermessung der Oberfläche 4 innerhalb eines Rasterfeldes 8 wird mittels eines Strahlungsmessgeräts vorgenommen. Dabei wird jedes der Rasterfelder 8 vermessen und die Strahlungsbelastung dokumentiert.

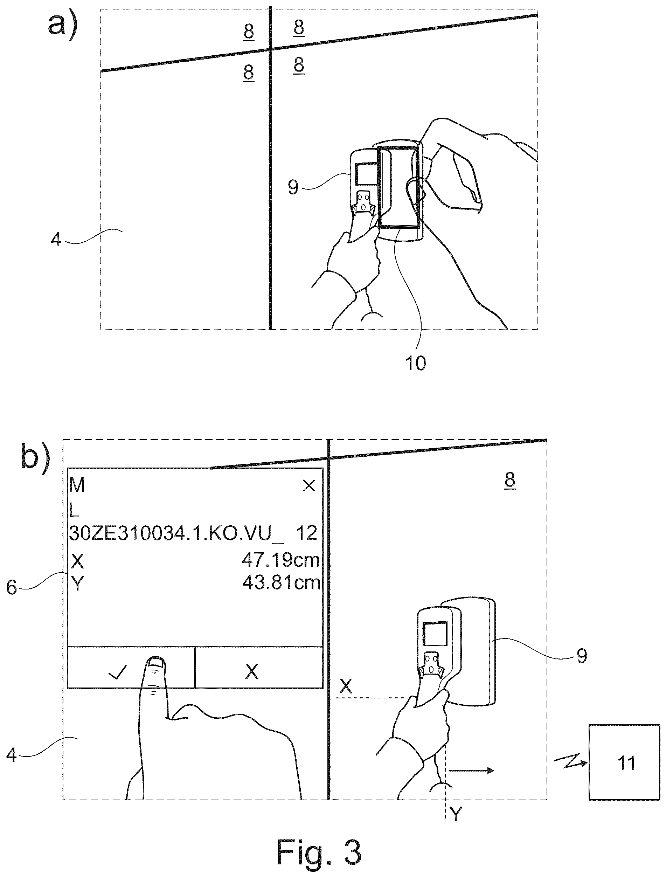

FIG. 3 stellt in Darstellung a) aus Sicht des die AR-Brille tragenden Benutzers die Vermessung eines Rasterfeldes 8 aus FIG. 2 dar. Der Benutzer hält in einer Hand ein Strahlungsmessgerät 9. Das Strahlungsmessgerät 9 misst die Strahlungsbelastung der Oberfläche 4, jeweils an der Stelle, wo sich das Strahlungsmessgerät 9 befindet.

Der Benutzer fährt zunächst die Oberfläche 4 innerhalb des in sein Sichtfeld projizierten Rasterfeldes 8 ab und sucht nach der Stelle mit der höchsten Strahlungsbelastung. Ist die gemessene Strahlungsbelastung höher als ein vordefinierter Grenzwert, liegt ein sogenannter Hotspot vor. Ist der Hotspot mit der höchsten Strahlungsbelastung gefunden (exemplarisch dort, wo das Strahlungsmessgerät 9 eingezeichnet ist), wird durch eine Gestensteuerung (angedeutet durch die transparente rechte Hand) der identifizierte Hotspot mit einer Markierung 10 versehen.

FIG. 3, Darstellung b) zeigt, wie in einem nächsten Schritt die Position des Strahlungsmessgerät 9 in dem Rasterfeld 8 durch die AR-Brille ermittelt wird. Die AR-Brille erfasst über das Kamerasystem die Position des Strahlungsmessgeräts 9 im virtuellen Raster 7, insbesondere innerhalb des Rasterfeldes 8, und bestimmt durch Verarbeitung der Rasterdaten und der visuellen Daten vom Kamerasystem die Position des Strahlungsmessgeräts 9 im Rasterfeld 8 in Form von X-Y-Koordinaten. Dadurch werden auch die Koordinaten des Hotspots auf der Oberfläche 4 bestimmt. Gleichzeitig empfängt die AR-Brille von dem Strahlungsmessgerät 9 via Bluetooth den durch das Strahlungsmessgerät 9 gemessenen Wert zur Strahlungsbelastung des Hotspots.

Die AR-Brille projiziert ein Interaktionsfenster 6 in das Sichtfeld des Benutzers. Das Interaktionsfenster 6 zeigt die ermittelte Position des Hotspots an.

Die ermittelten Daten zur Position des Hotspots und der zugehörigen Strahlungsbelastung werden durch das AR-System in einen Datenspeicher (Datenbank) 11 geschrieben. Außerdem wird eine Momentaufnahme des Sichtfelds des Benutzers gemacht, die ebenfalls in die Datenbank 11 geschrieben wird.

### Bezugszeichenliste

- 1: AR-System (AR-Brille)
- 2: transparentes Display
- 3: Sensoren
- 4: Oberfläche
- 5: Maschinenlesbares Signal (QR-Code)
- 6: Interaktionsfenster
- 7: virtuelles Raster
- 8: Rasterfeld
- 9: Strahlungsmessgerät
- 10: Markierung
- 11: Datenspeicher

## Patentansprüche

1. Verfahren zur radiologischen Charakterisierung von Oberflächen (4) in kerntechnischen Anlagen, bei dem
ein Raster mit einer Vielzahl von Rasterfeldern auf einer Oberfläche (4) in der kerntechnischen Anlage bereitgestellt wird; und
eine radiologische Vermessung der Oberfläche (4) innerhalb eines Rasterfeldes mittels eines Strahlungsmessgeräts (9) vorgenommen wird, um die Strahlungsbelastung der Oberfläche (4) in dem Rasterfeld (8) zu bestimmen,
**dadurch gekennzeichnet, dass**
das Raster auf der Oberfläche (4) mittels eines Augmented-Reality-Systems (AR-System) (1) virtuell bereitgestellt wird, indem das AR-System (1) ein virtuelles Raster (7) mit einer Vielzahl von virtuellen Rasterfeldern (8) in das Sichtfeld eines Benutzers des AR-Systems (1) derart projiziert, dass das virtuelle Raster (7) im Sichtfeld des Benutzers gemäß einer vordefinierten Anordnung auf der Oberfläche (4) erscheint.

2. Verfahren nach Anspruch 1, wobei, wenn bei der radiologischen Vermessung der Oberfläche (4) eine Strahlungsbelastung gemessen wird, die einen vordefinierten Grenzwert überschreitet, zumindest der Abschnitt der Oberfläche (4) mit der erhöhten Strahlungsbelastung abgetragen wird.

3. Verfahren nach Anspruch 1 oder 2, wobei bei der radiologischen Vermessung der Oberfläche (4) innerhalb eines virtuellen Rasterfeldes (8) eine Position des Strahlungsmessgeräts (9) im virtuellen Rasterfeld (8) durch das AR-System (1) bestimmt wird, und die ermittelte Position durch das AR-System (1) an einen Datenspeicher (11), insbesondere eine Datenbank, übermittelt und dort gespeichert wird.

4. Verfahren nach Anspruch 3, wobei die gemessene Strahlungsbelastung sowie die zugehörige ermittelte Position des Strahlungsmessgeräts (9) im virtuellen Rasterfeld (8) an den Datenspeicher (11) gesendet und dort gespeichert werden, wobei das Strahlungsmessgerät (9) signaltechnisch mit dem Datenspeicher (11) und/oder dem AR-System (1) verbunden ist.

5. Verfahren nach Anspruch 4, wobei dann, wenn eine Strahlungsbelastung gemessen wird, die einen vordefinierten Grenzwert überschreitet, die gemessene Strahlungsbelastung sowie die zugehörige ermittelte Position des Strahlungsmessgeräts (9) im virtuellen Rasterfeld (8) an den Datenspeicher (11) gesendet und dort gespeichert werden.

6. Verfahren nach Anspruch 4 oder Anspruch 5, wobei der Bereich der Oberfläche (4) mit der höchsten Strahlungsbelastung in dem virtuellen Rasterfeld (8) identifiziert wird, in einem weiteren Schritt der Bereich vermessen wird und die gemessene Strahlungsbelastung sowie die zugehörige ermittelte Position des Strahlungsmessgeräts (9) im virtuellen Rasterfeld (8) an den Datenspeicher (11) gesendet und dort gespeichert werden.

7. Verfahren nach einem der vorhergehenden Ansprüche 3 bis 6, wobei auf Grundlage der in dem Datenspeicher (11) gespeicherten Positionen und gemessenen Strahlungsbelastungen eine Dokumentation zur Strahlungsbelastung der Oberfläche (4) erstellt wird.

8. Verfahren nach einem der vorhergehenden Ansprüche, wobei ein oder mehrere Abschnitte auf der Oberfläche (4), in denen die gemessene Strahlungsbelastung einen vordefinieren Grenzwert überschreitet, im projizierten virtuellen Raster (7) manuell oder automatisch markiert werden.

9. Verfahren nach einem der vorhergehenden Ansprüche, wobei eine digitale Momentaufnahme des Sichtfelds des Benutzers erstellt wird, wobei die Momentaufnahme an den Datenspeicher (11) zur Speicherung übermittelt wird, wobei diese Momentaufnahme entweder als statisches Bild oder als Videoaufnahme vorliegen kann.

10. Verfahren nach einem der vorhergehenden Ansprüche,
wobei ein maschinenlesbares Signal (5) bereitgestellt wird, das einer vordefinierten Oberfläche (4) in der kerntechnischen Anlage zugewiesen ist, wobei das AR-System (1) dazu eingerichtet ist, das maschinenlesbare Signal (5) zu erfassen,
wobei in Reaktion auf das Erfassen des maschinenlesbaren Signals (5) durch das AR-System (1), der Oberfläche (4) zugeordnete Rasterdaten bereitgestellt werden, wobei die Rasterdaten die Anordnung des virtuellen Rasters (7) auf der Oberfläche (4) vorgeben; bevorzugt ist das maschinenlesbare Signal (5) ein auf der Oberfläche (4) angebrachter Code.

11. Verfahren nach einem der vorhergehenden Ansprüche, wobei eine Kommunikationsverbindung zwischen dem AR-System (1) und einem externen Kommunikationsgerät über ein Netzwerk hergestellt wird, wobei die Kommunikationsverbindung einen Video-Feed und/oder eine Sprachverbindung umfasst.

12. System zur radiologischen Charakterisierung von Oberflächen in kerntechnischen Anlagen, umfassend:
ein Speichermedium, das maschinenlesbare Rasterdaten aufweist, die zumindest einer Oberfläche (4) der kerntechnischen Anlage zugeordnet sind und die ein Raster mit einer Vielzahl von Rasterfeldern auf der Oberfläche (4) definieren,
ein AR-System (1), das dazu eingerichtet ist, die Rasterdaten zu verarbeiten und das Raster als ein virtuelles Raster (7) in das Sichtfeld eines Benutzers des AR-Systems (1) derart zu projizieren, dass aus dessen Sicht das virtuelle Raster (7) gemäß einer durch die Rasterdaten definierten Anordnung auf der Oberfläche (4) erscheint.

13. System nach Anspruch 12, ferner umfassend ein Strahlungsmessgerät (9), das mit dem System signaltechnisch koppelbar ist,
wobei das System dazu eingerichtet ist, eine Position des Strahlungsmessgeräts (9) auf der Oberfläche (4) zu bestimmen und zusammen mit der zugehörigen gemessenen Strahlungsbelastung zu speichern oder an einen Datenspeicher (11) weiterzuleiten;
bevorzugt ist das System so eingerichtet, dass es einen externen Zugang zu den gespeicherten Daten bereitstellt.
